# EUROPÄISCHE PATENTANMELDUNG

(11) **EP 4 155 173 A1**
(43) Veröffentlichungstag der Anmeldung: **29.03.2023**
(21) Anmeldenummer: 21198990.0
(22) Anmeldetag: 24.09.2021
(51) Int. Cl.: B62D 25/06, B62D 29/00

(54) **VERSTÄRKUNGSELEMENT ZUR VERSTÄRKUNG EINES STRUKTURELEMENTES**

(71) Anmelder: Sika Technology AG, 6340 Baar (CH)
(72) Erfinder: Tatrai, Istvan, 59000 Lille (FR); Haegel, Yannick, 59650 Villeneuve d'ascq (FR); Annenkoff, David, 59290 Wasquehal (FR); Meier, Michael, 5443 Niederrohrdorf (CH)
(74) Vertreter: Sika Patent Attorneys

(57) **Zusammenfassung**

Ein System eines verstärkten Strukturelementes eines Kraftfahrzeuges umfasst ein Verstärkungselement und ein Strukturelement, wobei das Verstärkungselement in einem Hohlraum des Strukturelementes angeordnet ist. Dabei ist das Strukturelement ein vorderer Dachquerträger einer Karosserie des Kraftfahrzeuges.

## Beschreibung

Die Erfindung betrifft ein Verstärkungselement zur Verstärkung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

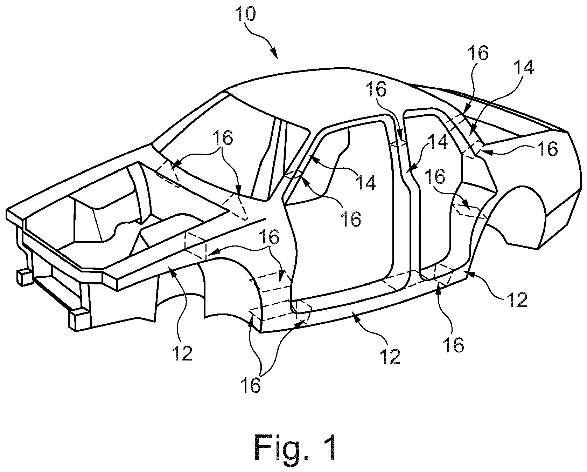

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an solchen und ähnlichen bekannten Verstärkungselementen ist es, dass dadurch insbesondere ein Dachbereich bei Fahrzeugen mit grossen Panoramadächern ungenügend verstärkt wird. Insbesondere bei sehr grossen und breiten Fahrzeugen wurde beobachtet, dass der Dachbereich durch bekannte Verstärkungselemente ungenügend verstärkt werden kann.

Der Erfindung liegt daher die Aufgabe zugrunde, ein verbessertes Verstärkungselement beziehungsweise ein verbessertes verstärktes Strukturelement zur Verfügung zu stellen, welches insbesondere eine bessere Verstärkung der Dachstruktur ermöglicht, und dies insbesondere bei grossen Fahrzeugen mit Panoramadächern.

Diese Aufgabe wird gelöst durch ein System eines verstärkten Strukturelementes eines Kraftfahrzeuges, das System umfassend: ein Verstärkungselement, welches einen Träger und ein darauf angeordnetes expandierbares Material hat; und ein Strukturelement, welches ein oberes Blech und ein unteres Blech umfasst, wobei zwischen den Blechen ein Hohlraum besteht; wobei das Verstärkungselement im Hohlraum des Strukturelementes angeordnet ist, und wobei das Strukturelement ein vorderer Dachquerträger einer Karosserie des Kraftfahrzeuges ist.

Die hier vorgeschlagene Lösung hat den Vorteil, dass durch das Vorsehen eines Verstärkungselementes im vorderen Dachquerträger der Karosserie eine markant verbesserte Verstärkung der Dachstruktur erzielt werden kann. Dies ist insbesondere bei Fahrzeugen wichtig, welche Panoramadächer haben, bei welchen weitere Querverstrebungen des Daches nur erschwert realisierbar sind.

Es hat sich gezeigt, dass die herkömmlich verwendeten Verstärkungselemente in Seitenträgern der Dachstruktur in gewissen Situationen den Dachbereich nicht ausreichend verstärken können. Durch die erfindungsgemässe Verwendung eines Verstärkungselementes im vorderen Dachquerträger der Karosserie kann nun eine Integrität der Dachstruktur auch bei hohen Einwirkungskräften aufrechterhalten werden.

Die hier vorgeschlagene Lösung hat zudem den Vorteil, dass keine weiteren Anpassungen an der Karosserie im Dachbereich notwendig sind. Es wird lediglich eine bereits bestehende Struktur, nämlich der vordere Dachquerträger, verstärkt. Somit sind keine weiteren Anpassungen des Designs oder benachbarter Strukturen notwendig.

Im Zusammenhang dieser Erfindung bedeuten die Begriffe "Oberseite" und "Unterseite" jeweils eine gesamte Mantelfläche einer Gesamtgestalt des Verstärkungselementes.

Da der Dachquerträger der Karosserie eine eindeutige Orientierung bezüglich oben und unten in einem Verwendungszustand des Kraftfahrzeuges hat, hat auch das darin angeordnete Verstärkungselement, welches durch die Form des Dachquerträgers ebenfalls eine flache Form hat, ebenfalls eine eindeutige Orientierung einer Ober- und einer Unterseite.

Als "vorderer Dachquerträger" wird im Zusammenhang mit dieser Erfindung diejenige Karosseriestruktur verstanden, welche die A-Säulen der Karosserie über der Windschutzscheibe verbindet.

In einer beispielhaften Ausführungsform beträgt eine Länge des Verstärkungselementes von 60% bis 90% einer Länge des Dachquerträgers. In einer bevorzugten Weiterbildung beträgt die Länge des Verstärkungselementes von 65% bis 85% einer Länge des Dachquerträgers.

In einer beispielhaften Weiterbildung ist das Verstärkungselement im Wesentlichen mittig im Dachquerträger angeordnet, so dass im Hohlraum beidseitig des Verstärkungselementes ein freier Bereich besteht.

Das Vorsehen eines Verstärkungselementes, welches den Dachquerträger nicht bis an den Rand ausfüllt, bietet den Vorteil, dass dadurch eine gewisse Verformung in den Endbereichen des Dachquerträgers ermöglicht wird bei einer Krafteinwirkung von aussen.

Durch eine solche Verformung der Endbereiche wird eine Kraft, welche auf das Verstärkungselement einwirkt, derart reduziert, dass ein Bruch des Verstärkungselementes vermieden werden kann. Somit kann insgesamt eine bessere Integrität der Gesamtstruktur ermöglicht werden, als dies bei längeren Verstärkungselementen der Fall wäre, weil dort ab einer gewissen Last ein Bruch des Verstärkungselementes zustande kommen würde.

In einer beispielhaften Ausführungsform hat das Verstärkungselement zumindest ein Fixierungselement zur Positionierung des Verstärkungselementes im Strukturelement.

In einer beispielhaften Weiterbildung ist dieses zumindest eine Fixierungselement als Pin ausgebildet. In einer alternativen Weiterbildung ist das Fixierungselement als Clip ausgebildet.

In einer beispielhaften Ausführungsform ist das Fixierungselement als Pin ausgebildet, und das Verstärkungselement hat nur einen solchen Pin.

In einer beispielhaften Ausführungsform ist der Pin an einer Unterseite des Verstärkungselementes angeordnet.

In einer beispielhaften Ausführungsform hat das untere Blech eine Öffnung oder Vertiefung, in welche der Pin des Verstärkungselementes eingreift.

In einer beispielhaften Ausführungsform ist der Pin in einem mittleren Bereich des Verstärkungselementes angeordnet.

Das Anordnen des Pins in einem mittleren Bereich des Verstärkungselementes hat den Vorteil, dass dadurch das Verstärkungselement nach der Einführung des Pins in die Öffnung oder Vertiefung in den Hohlraum eingepasst werden kann, indem eine Rotation um den Pin herum ermöglicht wird. Dadurch kann sichergestellt werden, dass beim Zusammenfügen des oberen und des unteren Blechs das Verstärkungselement in die korrekte Position gedreht wird. Beispielsweise kann das Verstärkungselement zu diesem Zweck Eckbereiche mit Distanzhaltern haben, welche eine genaue Positionierung zwischen den Blechen sicherstellen.

Wenn der Pin in einem Endbereich des Verstärkungselementes angeordnet wäre, dann wäre eine solche drehende rotierende Anpassung an den Hohlraum nur teilweise möglich, weil jener Endbereich, der näher am Pin gelegen ist, weniger rotieren könnte als der weiter entfernte Endbereich.

In einer beispielhaften Ausführungsform hat der Pin in einem Bereich des Pinbodens ein Loch.

Das Vorsehen eines solchen Lochs im Boden des Pins hat den Vorteil, dass dadurch die Tauchlackierungsflüssigkeit aus dem Pin wieder abfliessen kann und sich nicht unerwünschterweise darin ansammelt.

In einer beispielhaften Ausführungsform überragt der Pin die Unterseite des Verstärkungselementes um 5 bis 25 mm, bevorzugt um 10 bis 20 mm.

In einer beispielhaften Ausführungsform ist der Pin im Wesentlichen stumpfkegelförmig oder zylinderförmig ausgebildet.

In einer beispielhaften Ausführungsform ist der Pin in einem Bereich zwischen zwei Längsrippen angeordnet.

In einer beispielhaften Ausführungsform hat der Träger eine Mehrzahl von Längsrippen und eine Mehrzahl von Querrippen.

In einer beispielhaften Weiterbildung hat der Träger zumindest vier Längsrippen und/oder hat der Träger zumindest zwölf Querrippen.

In einer beispielhaften Ausführungsform sind die Längsrippen des Trägers dicker als die Querrippen des Trägers.

In einer beispielhaften Weiterbildung sind die Längsrippen dicker als 3 mm und die Querrippen sind dünner als 3 mm.

Durch eine solche Dimensionierung der Längs- und Querrippen kann erreicht werden, dass bei einem Spritzgussvorgang des Trägers eine bessere Verteilung des Trägermaterials in Längsrichtung gewährleistet werden kann durch dickere Materialstärke, wodurch der Träger mit einer reduzierten Anzahl von Injektionspunkten hergestellt werden kann.

In einer beispielhaften Ausführungsform ist auf einer Oberseite des Verstärkungselementes weniger expandierbares Material angeordnet als auf einer Unterseite des Verstärkungselementes.

Dies hat den Vorteil, dass in einem Lastfall eine Stauchung des unteren Bleches verhindert werden kann, und dass zudem die häufig vorkommenden Ausschnitte im unteren Blech kompensiert werden können, welche für verschiedene Anschlüsse von der Unterseite her oftmals notwendig sind.

In einer beispielhaften Weiterbildung ist die Oberseite zu weniger als 50% mit expandierbarem Material bedeckt, und ist die Unterseite mit mehr als 50% mit expandierbarem Material bedeckt.

In einer vorteilhaften Weiterbildung ist die Oberseite mit weniger als 45%, insbesondere mit weniger als 40%, mit expandierbarem Material bedeckt und ist die Unterseite mit mehr als 55%, insbesondere mit mehr als 60%, mit expandierbarem Material bedeckt.

In einer beispielhaften Ausführungsform ist das expandierbare Material auf der Oberseite in zwei Bahnen, welche durch Längsrippen begrenzt sind, angeordnet, und/oder ist das expandierbare Material auf der Unterseite in drei Bahnen, welche durch Längsrippen begrenzt sind, angeordnet.

In einer alternativen beispielhaften Ausführungsform ist das expandierbare Material auf der Oberseite in einer Bahn, welche durch Längsrippen begrenzt ist, angeordnet, und/oder ist das expandierbare Material auf der Unterseite in zwei Bahnen, welche durch Längsrippen begrenzt sind, angeordnet.

Durch eine solche Anordnung des expandierbaren Materials auf dem Träger lässt sich eine Trägerstruktur verwenden, welche einen schartenförmigen Querschnitt hat. Dadurch lassen sich unter Verwendung von entsprechenden Querrippen besonders laststabile Trägerstrukturen herstellen.

In einer beispielhaften Ausführungsform sind die Längsrippen bogenförmig ausgebildet.

Insbesondere sind die Längsrippen in einer Bogenform ausgebildet, welche durch den vorderen Dachquerträger vorgegeben ist.

In einer beispielhaften Ausführungsform verlaufen die Längsrippen im Wesentlichen parallel zueinander.

In einer beispielhaften Ausführungsform sind die Querrippen jeweils senkrecht zur Bogenform der Längsrippen ausgebildet und dadurch nicht parallel zueinander.

In einer alternativen Ausführungsform sind die Querrippen parallel zueinander ausgebildet, jedoch nicht in jedem Fall senkrecht zur Bogenform der Längsrippen.

In einer beispielhaften Ausführungsform beträgt eine Länge des Verstärkungselementes zwischen 600 und 1100 mm, insbesondere zwischen 700 und 900 mm.

In einer beispielhaften Ausführungsform beträgt eine Breite des Verstärkungselementes zwischen 70 mm und 300 mm, insbesondere zwischen 120 mm und 250 mm.

In einer beispielhaften Ausführungsform ist eine Dicke des expandierbaren Materials, gemessen jeweils senkrecht zur Oberseite beziehungsweise zur Unterseite des Verstärkungselementes, zwischen 1,5 und 5 mm, insbesondere zwischen 2 und 3 mm.

In einer beispielhaften Ausführungsform hat das Verstärkungselement keine Clips oder Schweisslaschen, sondern wird nur durch einen Pin und Distanzhalter in Eckbereichen des Verstärkungselementes im Hohlraum ausgerichtet.

Als expandierbares Material kann grundsätzlich verschiedenartiges Material eingesetzt werden, welches thermisch zur Schäumung gebracht werden kann. Dieses Material kann dabei vorzugsweise Verstärkungseigenschaften aufweisen.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200 °C, insbesondere von 120 °C bis 190 °C, bevorzugt von 160 °C bis 180 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Flüssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Ein beispielhaftes expandierbares Material mit Verstärkungseigenschaften wird unter dem Handelsnamen SikaReinforcer^{®} 941 von der Sika Corp., USA, vertrieben. Dieses ist weiterhin beschrieben in US 6,387,470.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 3b: eine beispielhafte Darstellung eines Verstärkungselementes;
- Fig. 4: eine beispielhafte Darstellung eines Systems eines verstärkten Strukturelementes; und
- Fig. 5: eine beispielhafte Darstellung einer Karosserie mit einem verstärkten Strukturelement.

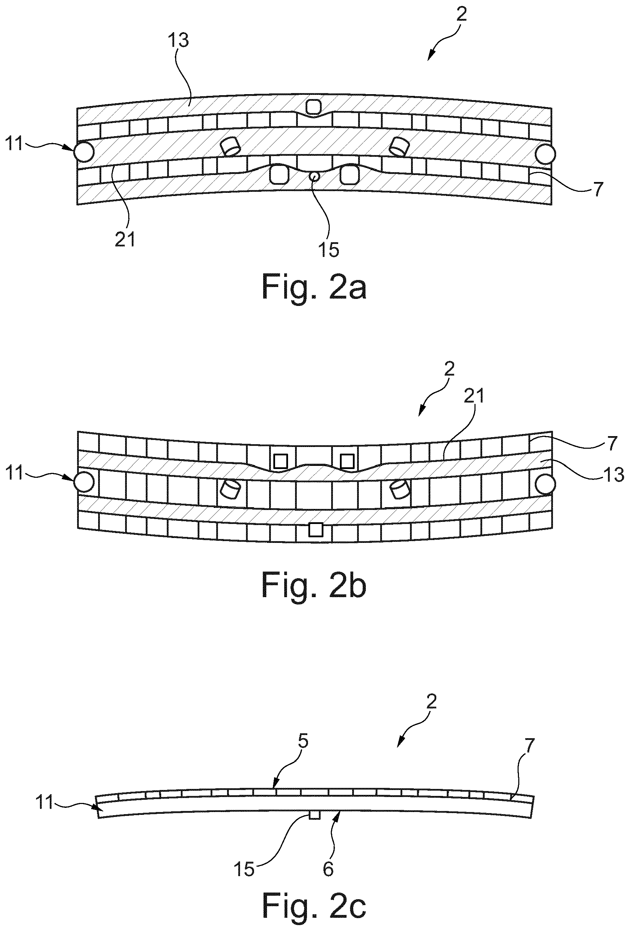

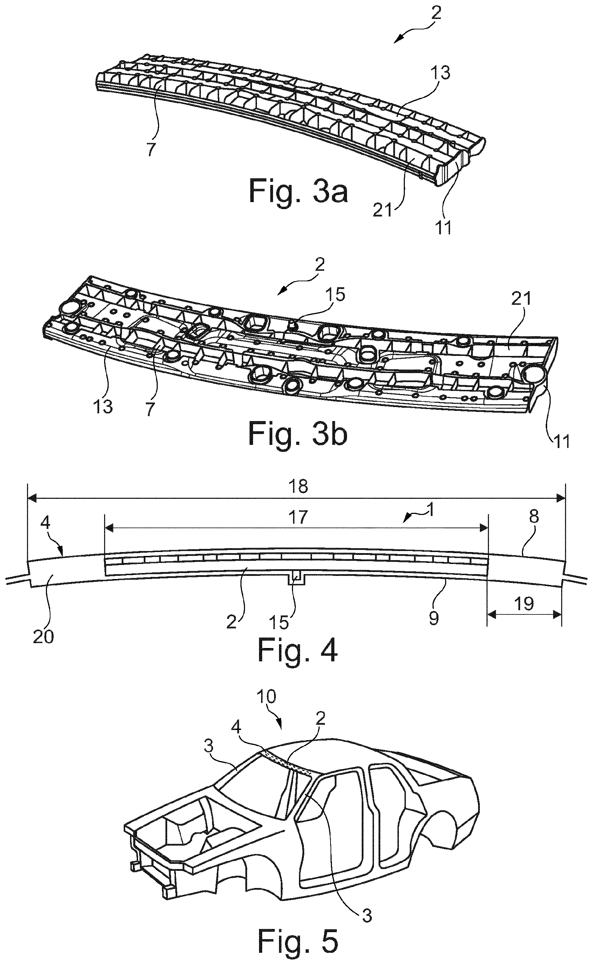

In den Fig. 2a bis 3b ist schematisch und beispielhaft ein Verstärkungselement 2 dargestellt. Dabei zeigt die Fig. 2a eine Unterseite 6 des Verstärkungselementes 2, die Fig. 2b zeigt eine Oberseite 5 des Verstärkungselementes 2, die Fig. 2c zeigt eine Seitenansicht des Verstärkungselementes 2, die Fig. 3a zeigt eine räumliche Darstellung von schräg oben auf das Verstärkungselement 2 und die Fig. 3b zeigt schliesslich eine räumliche Darstellung des Verstärkungselementes 2 mit Blick von schräg unten auf das Verstärkungselement 2.

Das Verstärkungselement 2 umfasst jeweils einen Träger 11 und darauf angeordnetes expandierbares Material 13. Der Träger 11 hat mehrere Längsrippen 21 und mehrere Querrippen 7. In diesem Ausführungsbeispiel ist das expandierbare Material 13 jeweils in länglichen Bahnen angeordnet, welche jeweils von Längsrippen 21 abgegrenzt werden. Dabei sind auf der Oberseite 5 zwei solche länglichen Bahnen von expandierbarem Material angeordnet, und auf der Unterseite 6 sind drei solche länglichen Bahnen des expandierbaren Materials 13 angeordnet.

Das Verstärkungselement 2 hat eine leicht bogenförmige Gestalt, sowohl in Bezug auf die Längsrichtung als auch in Bezug auf die Ausdehnung in die vertikale. Dadurch kann eine ideale Einpassung in die Form des Dachquerträgers gewährleistet werden.

Das Verstärkungselement 2 in diesem Ausführungsbeispiel hat als Fixierungselement einen einzigen Pin 15, welcher auf der Unterseite 6 des Verstärkungselementes angeordnet ist, und welcher im Wesentlichen in einem mittleren Bereich des Verstärkungselementes 2 angeordnet ist.

In Fig. 4 ist ein System 1 eines verstärkten Strukturelementes dargestellt. Das Strukturelement ist ein vorderer Dachquerträger 4, welcher ein oberes Blech 8 und ein unteres Blech 9 umfasst. Die Bleche 8 und 9 sind in ihren Endbereichen zusammengefügt und bilden einen Hohlraum 20. In diesem Hohlraum 20 ist das Verstärkungselement 2 angeordnet. Die Positionierung des Verstärkungselementes 2 im Dachquerträger 4 geschieht in diesem Ausführungsbeispiel durch einen Pin 15 des Verstärkungselementes 2, welcher in eine Vertiefung des unteren Blechs 9 eingeführt werden kann, so dass das Verstärkungselement grob in seiner vorgesehenen Position vorfixiert wird. Beim Zusammenführen der Bleche 8, 9 kann nun das Verstärkungselement 2 um den Pin 15 herum rotieren, so dass nach der Schliessung des Hohlraums 20 das Verstärkungselement 2 automatisch von den Blechen 8, 9 in die richtige Position gedreht wird.

Das Verstärkungselement 2 hat eine Länge 17, welche kleiner ist als eine Länge 18 des Dachquerträgers 4. Dadurch bleiben freie Bereiche 19 auf beiden Seiten des Verstärkungselementes 2 im Hohlraum 20 bestehen. Solche freien Bereiche 19 dienen dazu, dass bei einer Belastung der Struktur diese Endbereiche des Dachquerträgers 4 leicht deformieren können und dadurch eine maximale Belastung auf das Verstärkungselement 2 entscheidend reduziert wird, so dass das Verstärkungselement 2 nicht bricht.

In Fig. 5 ist schliesslich eine Karosserie 10 dargestellt, bei welcher im vorderen Dachquerträger 4 ein Verstärkungselement 2 angeordnet ist zur Verstärkung des Dachbereichs.

### Bezugszeichenliste

- 1: System
- 2: Verstärkungselement
- 3: Fahrsäule
- 4: vorderer Dachquerträger
- 5: Oberseite
- 6: Unterseite
- 7: Querrippe
- 8: oberes Blech
- 9: unteres Blech
- 10: Karosserie
- 11: Träger
- 12: Strukturelement
- 13: expandierbares Material
- 14: Strukturelement
- 15: Pin
- 16: Dämmelement
- 17: Länge des Verstärkungselementes
- 18: Länge des Dachquerträgers
- 19: freier Bereich
- 20: Hohlraum
- 21: Längsrippe

## Patentansprüche

1. System (1) eines verstärkten Strukturelementes (12, 14) eines Kraftfahrzeuges, das System (1) umfassend:
ein Verstärkungselement (2), welches einen Träger (11) und ein darauf angeordnetes expandierbares Material (13) hat; und
ein Strukturelement (12, 14), welches ein oberes Blech (8) und ein unteres Blech (9) umfasst, wobei zwischen den Blechen (8, 9) ein Hohlraum (20) besteht;
wobei das Verstärkungselement (2) im Hohlraum (20) des Strukturelementes (12, 14) angeordnet ist, und
wobei das Strukturelement (12, 14) ein vorderer Dachquerträger (4) einer Karosserie (10) des Kraftfahrzeuges ist.

2. System (1) nach Anspruch 1, wobei eine Länge (17) des Verstärkungselementes (2) von 60% bis 90% einer Länge (18) des vorderen Dachquerträgers (4) beträgt.

3. System (1) nach einem der vorhergehenden Ansprüche, wobei das Verstärkungselement (2) im Wesentlichen mittig im vorderen Dachquerträger (4) angeordnet ist, so dass im Hohlraum (20) beidseitig des Verstärkungselementes (2) ein freier Bereich (19) besteht.

4. System (1) nach einem der vorhergehenden Ansprüche, wobei das Verstärkungselement (2) zumindest ein Fixierungselement zur Positionierung des Verstärkungselementes (2) im Strukturelement (12, 14) hat.

5. System (1) nach Anspruch 4, wobei das Fixierungselement als Pin (15) ausgebildet ist.

6. System (1) nach Anspruch 5, wobei der Pin (15) an einer Unterseite (6) des Verstärkungselementes (2) angeordnet ist.

7. System (1) nach Anspruch 6, wobei das untere Blech (9) eine Öffnung oder Vertiefung hat, in welche der Pin (15) des Verstärkungselementes (2) eingreift.

8. System (1) nach einem der Ansprüche 5 bis 7, wobei das Verstärkungselement (2) nur einen Pin (15) hat.

9. System (1) nach Anspruch 8, wobei der Pin (15) in einem mittleren Bereich des Verstärkungselementes (2) angeordnet ist.

10. System (1) nach einem der Ansprüche 5 bis 9, wobei der Pin (15) in einem Bereich eines Pinbodens ein Loch hat.

11. System (1) nach einem der vorhergehenden Ansprüche, wobei der Träger (11) zumindest vier Längsrippen (21) und/oder zumindest zwölf Querrippen (7) hat.

12. System (1) nach einem der vorhergehenden Ansprüche, wobei Längsrippen (21) des Trägers (11) dicker sind als Querrippen (7) des Trägers (11), wobei insbesondere die Längsrippen (21) dicker als 3 mm sind und die Querrippen (7) dünner als 3 mm sind.

13. System (1) nach einem der vorhergehenden Ansprüche, wobei auf einer Oberseite (5) des Verstärkungselementes (2) weniger expandierbares Material (13) angeordnet ist als auf einer Unterseite (6) des Verstärkungselementes (2), wobei insbesondere die Oberseite (5) zu weniger als 50% mit expandierbarem Material bedeckt ist und die Unterseite (6) mit mehr als 50% mit expandierbarem Material (13) bedeckt ist.

14. System (1) nach einem der vorhergehenden Ansprüche, wobei das expandierbare Material (13) auf der Oberseite (5) in zwei Bahnen, welche durch Längsrippen (21) begrenzt sind, angeordnet ist, und/oder wobei das expandierbare Material (13) auf der Unterseite (6) in drei Bahnen, welche durch Längsrippen (21) begrenzt sind, angeordnet ist.

15. System (1) nach einem der vorhergehenden Ansprüche, wobei die Längsrippen (21) bogenförmig ausgebildet sind und/oder wobei die Längsrippen (21) im Wesentlichen parallel zueinander verlaufen.
